**Europäisches Patentamt**

**European Patent Office**

**Office européen des brevets**

(19)

(11) Veröffentlichungsnummer: **0 051 083**
**B1**

(12) **EUROPÄISCHE PATENTSCHRIFT**

(45) Veröffentlichungstag der Patentschrift:
**31.10.84**

(51) Int. Cl.³: **F 16 C 33/48**, F 16 C 23/08

(21) Anmeldenummer: **80106739.8**

(22) Anmeldetag: **03.11.80**

(54) **Metallfensterkäfig.**

(43) Veröffentlichungstag der Anmeldung:
**12.05.82 Patentblatt 82/19**

(45) Bekanntmachung des Hinweises auf die Patenterteilung:
**31.10.84 Patentblatt 84/44**

(84) Benannte Vertragsstaaten:
**DE FR GB IT SE**

(56) Entgegenhaltungen:
**DE - B - 1 002 993**
**DE - C - 848 125**
**DE - U - 1 790 657**
**DE - U - 1 935 798**
**GB - A - 483 625**
**US - A - 1 144 451**

(73) Patentinhaber: **FAG KUGELFISCHER GEORG SCHÄFER Kommanditgesellschaft auf Aktien, Georg-Schäfer-Strasse 30, D-8720 Schweinfurt (DE)**

(72) Erfinder: **Neese, Gerhard, Schrotberg 82, D-8724 Schonungen (DE)**

(74) Vertreter: **Rehmann, Klaus H., Postfach 1260 (FAG) Hauptbahnhofstrasse, D-8720 Schweinfurt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Metallfensterkäfig für hochbelastbare zweireihige bordlose Pendelrollenlager, bei denen sich die innenliegenden Rollenstirnflächen nahezu berühren.

Aus dem DE-U-1 790 657 sind Pendelrollenlagerkäfige bekannt, die im Querschnitt h-förmig ausgebildet sind, wobei die beiden Käfighälften mit Spiel an ihren Rückflächen aneinanderliegen, sowie mit entsprechend der Laufbahn des Außenrings geformten, diesen gegenüber Spiel besitzenden Mantelflächen versehen sind. Für hochbelastbare Pendelrollenlager, bei denen sich die innenliegenden Rollenstirnflächen nahezu berühren, sind derartige Käfige jedoch nicht verwendbar, da die aneinanderliegenden Rückenflächen axial zu viel Raum benötigen, der bei Lagern der eingangs genannten Art nicht vorhanden ist. Von weiterem Nachteil ist es, daß diese Rückenflächen eine federelastische radiale Verformbarkeit des Käfigs nicht zulassen, wie sie jedoch benötigt wird, um den Käfig in das Lager einzusetzen. Die radial verlaufenden Rückenflächen versteifen nämlich den Käfig und lassen nur eine geringe Ovalverformung zu, die nicht ausreicht, ihn durch den kleinsten Außenringdurchmesser hindurchzufedern. Ein solches Montageverfahren ist zwar mit einem Käfig nach der GB-A-483 625 möglich, doch besteht bei einem solchen Kammkäfig die Gefahr, daß die Rollen wegen der weit außerhalb des Teilkreises liegenden Käfigstege nicht ausreichend axial und radial geführt werden und auf die Käfigstege auflaufen. Außerdem betrifft das in der GB-A-483 625 dargestellte Lager nicht den Oberbegriff des Anmeldungsgegenstandes.

Schließlich ist es aus der US-A-1 144 451 noch bekannt, bei Kegelrollenlagerkäfigen den einen Käfigseitenrand nach dem Einlegen der Rollen mit Eindellungen zu versehen, um den Käfig im Lager zu halten und eine Baueinheit zu bilden. Das nachträgliche Eindellen des Käfigseitenrands ist nicht nur montageaufwendig, sondern auch bei einem gehärteten Käfig nicht möglich oder nicht mit entsprechender Genauigkeit durchzuführen. Außerdem betrifft das Lager nach der US-A-1 144 451 ebenfalls nicht den Oberbegriff des Anmeldegegenstandes.

Es ist deshalb Aufgabe der Erfindung, einen Metallfensterkäfig für hochbelastbare, zweireihige bordlose Pendelrollenlager der eingangs genannten Art zu schaffen, der die vorgenannten Nachteile nicht aufweist und es ermöglicht, trotz beengter Raumverhältnisse die Rollen axial und radial momentenfrei und sicher zu führen, ein Auflaufen auf die Käfigstege zu verhindern, den Käfig optimal am Außenring abzustützen und den Käfig einfach in das Lager einzubringen.

Die Lösung der Aufgabe erfolgt nach dem kennzeichnenden Teil des Anspruchs.

Als besonders günstig bei dem erfindungsgemäßen Käfig hat sich erwiesen, daß die Eindellungen der innenliegenden Käfigringteile zu einer Vielflächenführung des Käfigs am Außenring beitragen, die schmiertechnisch vorteilhaft ist. Weiterhin reduziert sich durch diese Eindellungen das Maß um das der Käfig beim Einbringen in den Außenring oval verformt werden muß. Schließlich vergrößern die Eindellungen die Anlagefläche an der Stirnseite der Rollen und verbessern die Seitenführung.

Die Erfindung soll an Ausführungsbeispielen näher erläutert werden. Es zeigt

Fig. 1 einen Teilquerschnitt durch ein zweireihiges Pendelrollenlager mit einem einteiligen Käfig,

Fig. 2 einen Ausschnitt der Vorderansicht eines erfindungsgemäßen Pendelrollenlagerkäfigs mit Eindellungen,

Fig. 3 einen Pendelrollenlageraußenring mit einem Käfig nach der Erfindung während des Einbringens.

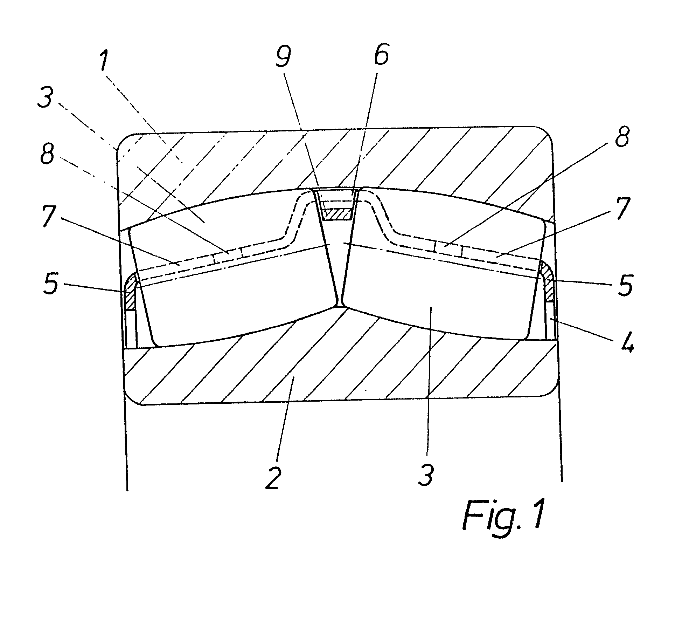

In Fig. 1 ist der Pendelrollenlageraußenring mit 1 bezeichnet. Zwischen dem Außenring 1 und dem Innenring 2 sind die Rollen 3 angeordnet, die von dem einteiligen Käfig 4 auf Abstand gehalten werden. Der Käfig 4 besitzt zwei außenliegende Käfigringteile 5 und einen innenliegenden Käfigringteil 6, der parallel zur Laufbahn des Außenrings 1 verläuft und nahezu an ihr anliegt. Zwischen den Käfigringteilen 5 und 6 erstrecken sich die Stege 7, die z. B. mit Haltenasen 8 für die Rollen 3 versehen sein können. Der innenliegende Käfigringteil 6 ist über seine Breite mit Eindellungen 9 versehen. Diese Eindellungen 9 bewirken, eine Vielflächenführung des Käfigs 4 am Außenring 1, die schmiertechnisch vorteilhaft ist, da sich Schmierstoffkeile ausbilden können.

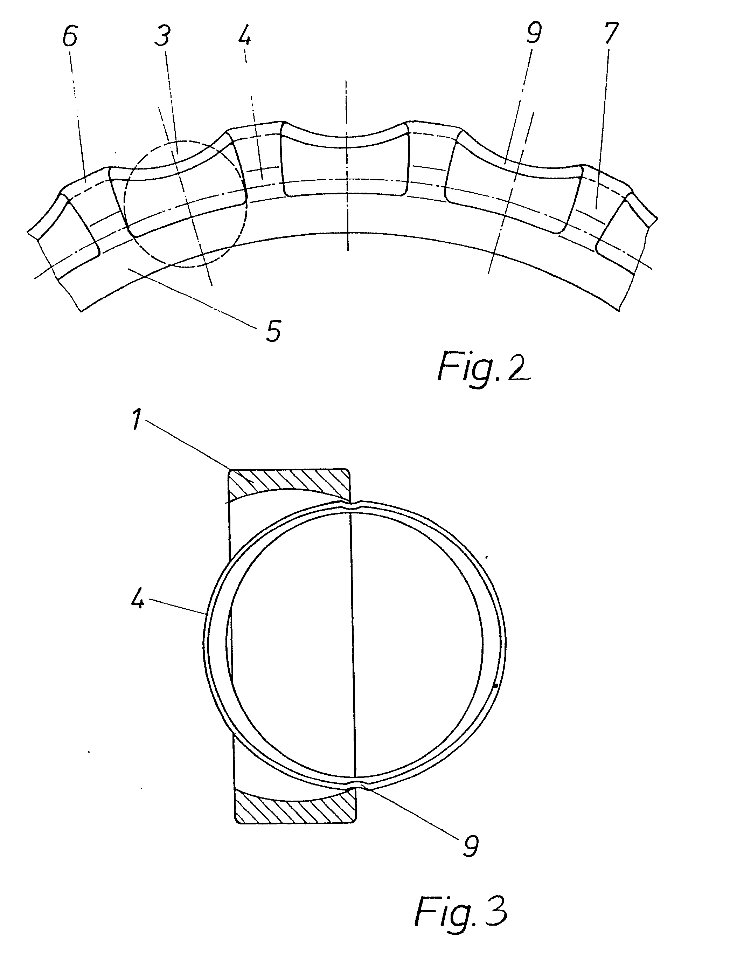

In Fig. 2 sind die Eindellungen 9 deutlich zu sehen und es ist zu erkennen, wie die Anlagefläche an der Stirnseite der Rolle 3 (gestrichelt gezeichnet) vergrößert wird. Aus diesem Grund ist es auch vorteilhaft, im Bereich jeder Tasche eine Eindellung 9 anzubringen, obwohl es zur Montageerleichterung genügen würde, nur zwei sich gegenüberliegende Eindellungen vorzusehen.

In Fig. 3 ist das Einbringen des Käfigs 4 in den Außenring 1 dargestellt. Dazu wird der Käfig 4 mit einer Eindellung 9 um 90° zum Außenring versetzt auf den außenliegenden Rand des Außenrings 1 aufgelegt, oval verformt und in den Laufring eingefedert. Dabei ergibt sich durch die radial verlaufenden äußeren Käfigringteile 5 ein »Tellerfedereffekt«, der den Käfig in seine Ausgangsform zurückführt, wenn der Käfig in den Laufring eingefedert ist. Der ebenfalls mit in den Außenring eingebrachte Innenring wird nach dem die Rollen eingesetzt sind, zusammen mit dem Käfig und den Rollen um 90° zurückgeschwenkt und das Lager ist fertig montiert.

## Patentanspruch

Metallfensterkäfig für hochbelastbare zweireihige bordlose Pendelrollenlager, bei denen sich die innenliegenden Rollenstirnflächen nahezu berühren, dadurch gekennzeichnet, daß der aus einem innenliegenden Käfigringteil (6), zwei außenliegenden Käfigringteilen (5) sowie die Ringteile verbindenden Stegen (7) bestehende, einteilig ausgebildete Käfig (4) federelastisch verformbar, z. B. aus gehärtetem Stahlblech gefertigt ist, der innenliegende Käfigringteil (6) parallel zur Laufbahn des Außenrings (1) verläuft und nahezu an ihr anliegt und an seinem Außendurchmesser über die gesamte Breite des innenliegenden Käfigringteils (6) mit Eindellungen (9) versehen ist, wobei die außenliegenden Käfigringteile (5) sich radial zum Innenring (2) hin erstrecken.

## Claim

Metal window type cage for heavy-duty double row lipless spherical roller bearings whose internal roller faces are nearly in contact characterized in that the one-piece cage (4) consisting of an inboard cage ring (6), two outboard cage rings (5) and the crosspieces (7) which connect these rings is elastically deformable e. g. made of hardened sheet steel the inboard cage ring (6) runs parallel to the outer ring raceway (1) and nearly contacts it and its outer diameter is provided with depressions (9) over the whole width of inboard cage ring (6), the outboard cage ring parts (5) extending radially towards the inner ring (2).

## Revendication

Cage à fenêtres en métal pour roulements à rotule sur deux rangées de rouleaux sans épaulements et d'une capacité de charge élevée, dont les faces intérieures des rouleaux sont presque en contact les unes avec les autres et caractérisée par le fait que la cage en une partie (4) constituée d'une partie annulaire intérieure (6), de deux parties annulaires extérieures (5) et de barrettes (7) et que relie ces bagues est élastiquement déformable, et par exemple fabriquée en tôle d'acier trempée et la partie annulaire intérieure (6) étant parallèle au chemin de roulement de la bague extérieure (1) et étant presque en contact avec celle-ci et présentand sur son diamètre extérieur des dépressions (9) qui occupent toute la largeur de la partie annulaire intérieure de la cage (6), les parties annulaires extérieures de la cage (2) s'étendant radialement en direction de la bague intérieure (2).

*Fig. 1*

Fig. 2

Fig. 3